# EUROPÄISCHE PATENTSCHRIFT

(11) **EP 3 581 026 B1**
(45) Veröffentlichungstag und Bekanntmachung des Hinweises auf die Patenterteilung: **17.07.2024**
(21) Anmeldenummer: 18177995.0
(22) Anmeldetag: 15.06.2018
(51) Int. Cl.: A01K 9/00, A01K 5/02

(54) **VERFAHREN UND MILCHWAGEN ZUR FÜTTERUNG VON NUTZTIEREN**
METHOD AND MILKING CARRIAGE FOR FEEDING LIVESTOCK
PROCÉDÉ ET CAMION DE LAITIER D'ALIMENTATION DU BÉTAIL

(43) Veröffentlichungstag der Anmeldung: 18.12.2019
(73) Patentinhaber: Holm, Hans Joachim, 24784 Westerrönfeld (DE); Laue, Hans-Joachim, 24783 Osterrönfeld (DE)
(72) Erfinder: Holm, Hans Joachim, 24784 Westerrönfeld (DE); Laue, Hans-Joachim, 24783 Osterrönfeld (DE)
(74) Vertreter: Hauck Patentanwaltspartnerschaft mbB

(56) Entgegenhaltungen:
- EP-A1- 1 058 499
- EP-A1- 2 965 619
- EP-A1- 3 131 387
- WO-A1-03/094605
- DE-A1- 19 938 637
- KR-B1- 101 334 768
- US-B1- 6 497 197

## Beschreibung

Die Erfindung betrifft ein Verfahren und einen Milchwagen zur Fütterung von Nutztieren, insbesondere zur *Ad libitum*-Fütterung*.* Die Fütterung von Nutztieren wie insbesondere Kälbern erfolgt heute zumeist durch Zuteilung bedarfsgerechter Portionen an die einzelnen Nutztiere. Bei Verwendung flüssiger Nahrungsmittel wie insbesondere Milchaustauscher oder Vollmilch geschieht dies mit Tränkeautomaten, die einzelne Tiere an einem Abrufstand identifizieren und dann die gewünschte Tränkeration bereitstellen. Ist die Tränkeration aufgebraucht, erhält das Tier bis zur nächsten, planmäßigen Fütterung kein weiteres Nahrungsmittel. Bei Einzel- oder Kleingruppenhaltung der Tiere, zum Beispiel in Kälberboxen, kann eine entsprechende Fütterung durch Bereitstellen des flüssigen Nahrungsmittels in Tränkebehältern (beispielsweise Nuckeleimer oder Tröge) erfolgen, die den jeweiligen Kälberboxen zugeordneten sind. Hierzu haben sich in den letzten Jahren sogenannte Milchwagen durchgesetzt, die mithilfe einer Dosiersteuerung automatisch eine bestimmte Menge des flüssigen Nahrungsmittels in den jeweiligen Tränkebehälter einfüllen. In diesem Zusammenhang ist es ebenfalls bekannt, die zu versorgenden Tiere zu identifizieren und individuelle Tränkerationen vorzugeben. Ein Beispiel für einen solchen Milchwagen ist in der Druckschrift EP 2 965 619 A1 beschrieben.

Einen anderen Ansatz verfolgt die sogenannte *Ad libitum*-Fütterung. Statt bedarfsgerechte Tränkerationen zuzuteilen, werden den Tieren praktisch unbegrenzte Futtermittelmengen angeboten. Eine solche *Ad libitum*-Fütterung scheint nach bisherigen Erkenntnissen vorwiegend in den ersten Lebenswochen der Nutztiere vorteilhaft zu sein.

Bei der *Ad libitum*-Fütterung mittels Tränkebehältern ergeben sich jedoch besondere Schwierigkeiten, wenn die konsumierten Nahrungsmittelmengen erfasst werden sollen. Dies ist grundsätzlich wünschenswert, um die Entwicklung der Nutztiere verfolgen zu können. Bei der herkömmlichen, rationierten Nahrungsmittelabgabe ist es zumeist ausreichend, die jeweiligen, ausgegebenen Nahrungsmittelmengen zu erfassen, weil diese in der Regel vollständig konsumiert werden. Bei der *Ad libitum-*Fütterung mittels Tränkeautomaten ist eine Erfassung der tatsächlich konsumierten Mengen möglich, weil der Tränkeautomat nur dann Nahrungsmittel bereitstellt, wenn das jeweilige Tier dieses abfordert und zudem gegebenenfalls den Konsum von kleineren Teilportionen erfassen und aufsummieren kann. Bei einer *Ad libitum-*Fütterung mittels Tränkebehältern müssen diese jedoch so reichlich befüllt werden, dass zu jedem Zeitpunkt ausreichend Tränke bereitsteht. Die dabei unvermeidlichen Restmengen, die sich zu einem nachfolgenden Fütterungszeitpunkt noch im jeweiligen Tränkebehälter befinden, werden verworfen oder an andere Tiere oder Gruppen von Tieren verfüttert. Darum können die Befüllmengen der Tränkebehälter keinen Aufschluss über die tatsächlich konsumierten Mengen geben.

Aus der Druckschrift WO 03/094605 A1 ist ein Verfahren zum Bestimmen einer von einem Tier getrunkenen Menge an flüssigem Nahrungsmittel bekannt geworden. Bei dem bekannten Verfahren wird eine Tränkeschale beim Besuch eines zuvor identifizierten Tiers mit einer bestimmten Nahrungsmittelmenge befüllt. Sobald der Trinkvorgang beendet ist, wird die in der Tränkeschale befindliche Restmenge ermittelt und aus der Differenz zwischen Befüllmenge und Restmenge wird die konsumierte Menge berechnet.

Davon ausgehend ist es die Aufgabe der Erfindung, ein Verfahren und einen Milchwagen zur Fütterung von Nutztieren mit einem flüssigen Nahrungsmittel zur Verfügung zu stellen, das bzw. der eine einfache Überwachung der individuell konsumierten Tränkemengen bei praktisch unbegrenzter Verfügbarkeit des flüssigen Nahrungsmittels ermöglichen.

Diese Aufgabe wird gelöst durch das Verfahren mit den Merkmalen des Anspruchs 1 und durch den Milchwagen mit den Merkmalen des Anspruchs 7. Vorteilhafte Ausgestaltungen sind in den sich jeweils anschließenden Unteransprüchen angegeben.

Es versteht sich, dass das Verfahren insbesondere mit dem Milchwagen ausgeführt werden kann und dass der Milchwagen so ausgebildet sein kann, dass mit ihm alle nachfolgend beschriebenen Schritte des Verfahrens einzeln oder in Kombination ausgeführt werden können. Entsprechend kann das Verfahren sämtliche nachfolgend im Zusammenhang mit dem Milchwagen beschriebenen Merkmale nutzen.

Das Verfahren dient zur Fütterung von Nutztieren, insbesondere zur *Ad libitum-*Fütterung, mit einem flüssigen Nahrungsmittel und weist die folgenden Schritte auf:
- Bereitstellen eines Milchwagens, der einen Vorratsbehälter mit einem Vorrat des flüssigen Nahrungsmittels, eine Erfassungseinrichtung zum Erfassen einer einem Tränkebehälter zugeordneten Kennzeichnung und eine Dosiersteuerung zum automatischen Abgeben einer definierten Menge des flüssigen Nahrungsmittels aus dem Vorratsbehälter in einen Tränkebehälter aufweist,
- Identifizieren eines Tränkebehälters, der einem bestimmten Tier oder einer bestimmten Gruppe von Tieren zugeordnet ist, mit der Erfassungseinrichtung und Befüllen des identifizierten Tränkebehälters mit der Dosiersteuerung mit einer Befüllmenge des flüssigen Nahrungsmittels zu einem ersten Zeitpunkt und Speichern der Befüllmenge,
- Erneutes Identifizieren des Tränkebehälters mit der Erfassungseinrichtung und Ermitteln einer in dem Tränkebehälter enthaltenen Restmenge zu einem zweiten, späteren Zeitpunkt,
- Berechnen einer konsumierten Menge des flüssigen Nahrungsmittels als Differenz zwischen der Befüllmenge und der Restmenge.

Der Milchwagen weist ein Fahrgestell mit Rädern auf, sodass er von einer Bedienperson einfach von Kälberbox zu Kälberbox gefahren werden kann. Der Vorratsbehälter kann ein Fassungsvermögen im Bereich von beispielsweise 50 1 bis 500 1 aufweisen und er kann von einem Deckel verschlossen sein. Das flüssige Nahrungsmittel, das vor der Ausführung des Verfahrens in den Vorratsbehälter eingegeben wurde, kann Vollmilch oder Milchaustauscher sein, also ein aus Milchpulver und Wasser und gegebenenfalls weiteren Zusatzstoffen angemischtes Futtermittel. Der Milchaustauscher kann in dem Vorratsbehälter angemischt worden sein, wofür der Milchwagen ein Rührwerk aufweisen kann.

Die Dosiersteuerung kann eine Förderpumpe aufweisen, mit der flüssiges Nahrungsmittel aus dem Vorratsbehälter angesaugt und zu einer Abgabevorrichtung gefördert werden kann. Die Abgabevorrichtung kann insbesondere eine Zapfpistole, ein Rohr oder ein Schlauch sein und zum einfachen Befüllen eines Tränkebehälters in dem Tränkebehälter oder oberhalb davon angeordnet werden. Mit der Dosiersteuerung kann eine definierte Menge des flüssigen Nahrungsmittels abgegeben werden, wobei die definierte Menge von einem Benutzer manuell eingegeben werden kann. Hierzu kann der Benutzer beispielsweise einen Zahlenwert für die Abgabemenge in Liter eingeben oder einen Wählschalter in eine entsprechende Stellung bringen. Ebenfalls möglich ist, dass eine vorausgewählte Menge von einer Anzeige angezeigt und von einem Benutzer lediglich bestätigt wird. Außerdem kann die definierte Menge auch vollautomatisch von einer Steuerung des Milchwagens abgegeben werden, insbesondere nach einem vorgegebenen Fütterungsprogramm, das einem anhand seiner Kennzeichnung identifizierten Tränkebehälter eine bestimmte Menge zuordnet.

Bei der Erfindung wird zu einem ersten Zeitpunkt, beispielsweise zu einer ersten Fütterungszeit um 6:00 Uhr morgens, in einem ersten Arbeitsschritt ein bestimmter Tränkebehälter mit der Erfassungseinrichtung identifiziert und mit der Dosiersteuerung befüllt. Dabei wird die Befüllmenge gespeichert. So kann später nachvollzogen werden, welche Futtermittelmenge dem Tier oder der Gruppe von Tieren, das oder die sich aus dem identifizierten Tränkebehälter bedient bzw. bedienen, angeboten wurde.

Zu einem zweiten, späteren Zeitpunkt, beispielsweise am Abend desselben Tages, wenn die nächste Fütterung stattfindet, wird der Tränkebehälter erneut mit der Erfassungseinrichtung identifiziert. Dann wird eine in dem Tränkebehälter enthaltene Restmenge ermittelt. Das Ermitteln der Restmenge wird mit einer hierfür vorgesehenen Einrichtung zur Ermittlung einer Restmenge des Milchwagens bewerkstelligt. Grundsätzlich könnte die Ermittlung der Restmenge jedoch auch manuell ausgeführt werden, beispielsweise durch Ablesen einer Skala an dem Tränkebehälter. In jedem Fall wird die ermittelte Restmenge für den nachfolgenden Verfahrensschritt, in dem eine konsumierte Menge des flüssigen Nahrungsmittels als Differenz zwischen der Befüllmenge und der Restmenge berechnet wird, verfügbar gemacht.

Das Berechnen der konsumierten Menge kann ebenfalls von einer hierfür eingerichteten Steuerung des Milchwagens ausgeführt werden. Alternativ kann der Berechnungsschritt unabhängig von dem Milchwagen mit einer externen Berechnungseinrichtung ausgeführt werden, beispielsweise einem Fütterungsmanagementsystem, das einen PC aufweist. Diese externe Berechnungseinrichtung kann mit einer Steuerung des Milchwagens vernetzt sein, sodass die gespeicherte Befüllmenge und die ermittelte Restmenge gegebenenfalls von dem Milchwagen zu der externen Berechnungseinrichtung übertragen werden können. Hierfür kann es zweckmäßig sein, die Befüllmenge und die ermittelte Restmenge zunächst in einer Speichereinrichtung des Milchwagens zu speichern. Möglich ist jedoch auch eine sofortige Übermittlung an die externe Berechnungseinrichtung.

Es versteht sich, dass das Verfahren mit einem Milchwagen für eine große Anzahl an Tränkebehältern ausgeführt werden kann. Beispielsweise können bei der morgendlichen Fütterung 100 Tränkebehälter der Reihe nach identifiziert und befüllt werden. Zur nächsten Fütterung können dieselben Tränkebehälter in beliebiger Reihenfolge erneut identifiziert werden und es können die jeweils enthaltenen Restmengen ermittelt werden. Durch die problemlos mögliche Erfassung der Kennzeichnungen der einzelnen Tränkebehälter kann jede der verabreichten Befüllmengen und jede der ermittelten Restmengen automatisch dem richtigen Tränkebehälter zugeordnet werden, sodass die Berechnung der konsumierten Mengen für jeden einzelnen Tränkebehälter ohne weiteres gelingt. Auf diese Weise kann auch bei einer Ad *libitum*-Fütterung durch Befüllen gewöhnlicher Tränkebehälter ein genauer Überblick über die konsumierten Mengen für jedes einzelne Tier bzw. für jede Gruppe von Tieren erhalten werden.

In einer Ausgestaltung des Verfahrens ist die dem Tränkebehälter zugeordnete Kennzeichnung maschinenlesbar und wird von der Erfassungseinrichtung automatisch eingelesen. Grundsätzlich ist auch eine manuelle Erfassung der individuellen Kennzeichnungen möglich, beispielsweise durch manuelles Eingeben einer dem Tränkebehälter zugeordneten Zeichenkombination aus Ziffern und/oder Buchstaben. Ein automatisches Einlesen einer maschinenlesbaren Kennzeichnung ist jedoch wesentlich schneller und einfacher möglich, ohne dass es zu Flüchtigkeitsfehlern kommen kann. Geeignet als maschinenlesbare Kennzeichnung sind beispielsweise Barcodes oder QR-Codes oder RF-ID-Tags, die mit einem jeweils geeigneten Lesegerät der Erfassungseinrichtung eingelesen werden können.

In einer Ausgestaltung wird der erneut identifizierte Tränkebehälter in den Vorratsbehälter oder in einen gesonderten Restmengenbehälter des Milchwagens entleert. Dies geschieht im zeitlichen Zusammenhang mit dem Ermitteln der Restmenge, also zu dem zweiten, späteren Zeitpunkt. Dadurch kann der Milchwagen für eine einfache Einsammlung und Entsorgung der Restmengen genutzt werden. Wird hierfür der Vorratsbehälter des Milchwagens genutzt, müssen das Befüllen der Tränkebehälter und das Einsammeln der Restmengen in gesonderten Arbeitsgängen erledigt werden. Bei der Verwendung eines gesonderten Restmengenbehälters muss jeder Tränkebehälter nur einmal angefahren werden und es kann unmittelbar nach dem Entleeren des Tränkebehälters ein erneutes Befüllen erfolgen.

In einer Ausgestaltung des Verfahrens wird der erneut identifizierte Tränkebehälter nach dem Ermitteln der Restmenge mit der Dosiersteuerung mit einer neuen Befüllmenge des flüssigen Nahrungsmittels befüllt und die neue Befüllmenge wird gespeichert. Die neue Befüllmenge kann von der zuvor verwendeten Befüllmenge verschieden sein, es kann sich jedoch auch um dieselbe Menge handeln. In jedem Fall wird die neue Befüllmenge gespeichert, sodass später, wenn eine neue Restmenge ermittelt wird, eine neue konsumierte Menge berechnet werden kann.

In einer Ausgestaltung des Verfahrens wird die neue Befüllmenge automatisch in Abhängigkeit von einer zuvor für denselben Tränkebehälter ermittelten Restmenge und/oder in Abhängigkeit von einer zuvor für denselben Tränkebehälter berechneten konsumierten Menge festgelegt. Diese Festlegung kann von der Dosiersteuerung, einer sonstigen Steuerung des Milchwagens oder von einer externen Steuerung vorgenommen werden. Insbesondere kann die neue Befüllmenge so vorgegeben werden, dass bei unverändertem Konsumverhalten zum Zeitpunkt der nächsten Fütterung eine Restmenge in einem bestimmten Bereich, beispielsweise in einem Bereich von 0,11 bis 11, erwartet werden kann. Dadurch wird die angestrebte, ständige Verfügbarkeit des Nahrungsmittels bei möglichst geringen, zu verwerfenden Restmengen erreicht.

Die oben genannte Aufgabe wird ebenfalls gelöst durch den Milchwagen mit den Merkmalen des Anspruchs 6. Der Milchwagen dient zur Fütterung von Nutztieren, insbesondere zur *Ad dibitum*-Fütterung, mit einem flüssigen Nahrungsmittel und weist folgendes auf:
- einen Vorratsbehälter zur Aufnahme eines Vorrats des flüssigen Nahrungsmittels,
- eine Erfassungseinrichtung zum Erfassen einer einem Tränkebehälter oder einem Nutztier zugeordneten Kennzeichnung,
- eine Dosiersteuerung zum automatischen Abgeben einer Befüllmenge des flüssigen Nahrungsmittels aus dem Vorratsbehälter in einen Tränkebehälter,
- eine Einrichtung zur Ermittlung einer Restmenge, die einem Tränkebehälter zu entnehmen ist oder entnommen wurde, und
- eine Auswerteeinrichtung, die dazu ausgebildet ist, eine Befüllmenge, die mit der Dosiersteuerung in einen identifizierten Tränkebehälter abgegeben wird, und eine mit der Einrichtung zur Ermittlung einer Restmenge ermittelte Restmenge zu protokollieren und/oder auszuwerten.

Zu den Merkmalen des Milchwagens wird auf die vorstehenden Erläuterungen des Verfahrens verwiesen, die entsprechend gelten.

Ein besonderer Vorteil des Milchwagens besteht in der Einrichtung zur Ermittlung einer Restmenge. Mit dieser Einrichtung kann bei der Ausführung des Verfahrens sehr einfach die in einem erneut identifizierten Tränkebehälter befindliche Restmenge ermittelt werden. Je nach Ausgestaltung der Einrichtung geschieht dies bevorzugt während des Entleerens oder nach dem Entleeren des Tränkebehälters.

Außerdem hat der Milchwagen eine Auswerteeinrichtung mit der Befüllmengen und Restmengen identifizierter Tränkebehälter ausgewertet oder zumindest protokolliert werden können. Bei der Auswertung wird insbesondere eine konsumierte Menge berechnet, wie im Zusammenhang mit dem Verfahren erläutert. Werden Befüllmengen und Restmengen von der Auswerteeinrichtung des Milchwagens lediglich protokolliert, kann diese Auswertung zu einem späteren Zeitpunkt erfolgen, entweder mit der Auswerteeinrichtung des Milchwagens oder mit einer externen Auswerteeinrichtung. Auch diese Variante wurde im Zusammenhang mit dem Verfahren bereits erläutert.

Insgesamt gelingt es mit dem erfindungsgemäßen Milchwagen problemlos, auch bei einer großen Anzahl an Tränkebehältern einen Überblick über die konsumierten Mengen zu erhalten. Auch dies wurde im Zusammenhang mit dem Verfahren bereits erläutert.

In einer Ausgestaltung ist die Auswerteeinrichtung dazu ausgebildet, eine konsumierte Menge des flüssigen Nahrungsmittels als Differenz zwischen der Befüllmenge und der Restmenge zu berechnen. Alternativ oder zusätzlich kann die Auswerteeinrichtung oder eine sonstige Steuerung des Milchwagens auch dazu ausgebildet sein, eine neue Befüllmenge unter Berücksichtigung einer zuvor für denselben Tränkebehälter berechneten, konsumierten Menge und/oder einer zuvor für denselben Tränkebehälter ermittelten Restmenge vorzugeben. Auch hierzu wird auf die Erläuterungen der korrespondierenden Ausgestaltung des Verfahrens verwiesen.

In einer Ausgestaltung weist der Milchwagen einen Restmengenbehälter auf, der zur Aufnahme von Restmengen aus Tränkebehältern vorgesehen ist, wobei der Restmengenbehälter von dem Vorratsbehälter gebildet oder ein davon getrennter Behälter ist. Wird ein gesonderter Restmengenbehälter verwendet, kann dieser insbesondere ein geringeres Fassungsvermögen aufweisen als der Vorratsbehälter, beispielsweise etwa 10 % bis 50 % davon. Ist als Restmengenbehälter ein gesonderter Behälter des Milchwagens vorgesehen, kann der Vorratsbehälter des Milchwagens wahlweise auch zum Transport von Wasser oder von einer Reinigungsflüssigkeit eingesetzt werden. Das Wasser oder die Reinigungsflüssigkeit kann dann nach dem Absaugen einer Restmenge in den Tränkebehälter eingefüllt werden, insbesondere mithilfe einer Förderpumpe, die auch zum Abgeben von flüssigem Nahrungsmittel aus dem Vorratsbehälter dient. Hierzu kann eine Abgabevorrichtung des Milchwagens eine Sprühdüse aufweisen.

In einer Ausgestaltung weist der Milchwagen eine Absaugpumpe zum Absaugen von Restmengen aus Tränkebehältern auf, wobei an einer Druckseite der Absaugpumpe eine Leitung angeordnet ist, die zu dem Restmengenbehälter führt. Mithilfe einer solchen Absaugpumpe können die Tränkebehälter besonders einfach entleert werden, ohne dass die Tränkebehälter hierfür aus einer Halterung an der Kälberbox gelöst werden müssen. Die Absaugpumpe kann von einer Förderpumpe zum Abgeben von flüssigem Nahrungsmittel aus dem Vorratsbehälter verschieden sein, sodass Verunreinigungen des frischen Nahrungsmittels durch die Restmengen ausgeschlossen werden können. Es kann aber auch eine Förderpumpe zum Abgeben von flüssigem Nahrungsmittel mit umgekehrter Saugrichtung betrieben und auf diese Weise als Absaugpumpe eingesetzt werden. In diesem Fall kann einem von dem Behälter abgewandten Anschluss der Pumpe (also einer Saugseite der Pumpe, wenn die Pumpe als Absaugpumpe genutzt wird) ein Ventil zugeordnet sein, das diesen Anschluss in einer ersten Ventilstellung mit einer Abgabevorrichtung zum Abgeben von flüssigem Nahrungsmittel und in einer zweiten Ventilstellung mit einer Absaugleitung verbindet. In jedem Fall kann die Absaugpumpe wahlweise auch zum Absaugen von Wasser oder von einer Reinigungsflüssigkeit aus dem Tränkebehälter eingesetzt werden. Die bei einem solchen Absaugvorgang abgesaugte Flüssigkeitsmenge soll nicht in die ermittelte Restmenge einfließen, darum kann der Milchwagen ein gesondertes Betätigungselement zum Ausführen eines solchen Absaugvorgangs aufweisen. Ebenfalls möglich ist eine automatische Steuerung, die in einem ersten Schritt die Absaugung und Ermittlung einer Restmenge bewirkt, in einem zweiten Schritt eine Befüllung des Tränkebehälters mit Wasser oder mit einer Reinigungsflüssigkeit und in einem dritten Schritte eine Absaugung des Wassers oder der Reinigungsflüssigkeit aus dem Tränkebehälter. Alle drei Schritte können dann durch eine einzige Betätigung eines Betätigungselements und/oder mit einem einzigen Betätigungselement ausgelöst werden.

In einer Ausgestaltung weist der Milchwagen eine handhabbare Absauglanze auf, die über eine Absaugleitung mit einer Saugseite der Absaugpumpe verbunden ist, wobei optional an der Absauglanze ein Bedienelement zum Einschalten der Absaugpumpe angeordnet ist. Die Absauglanze kann eine Absaugöffnung aufweisen, die manuell in den Tränkebehälter eingeführt wird. Die Absaugpumpe wird dann so lange betrieben, bis der Tränkebehälter vollständig entleert ist. Um dabei ein übermäßiges Trockenlaufen der Absaugpumpe zu vermeiden, ist eine Bedienung mit einem direkt an der Absauglanze angeordneten Bedienelement besonders komfortabel. Die Sprühdüse und/oder das Betätigungselement, beides vorstehend im Zusammenhang mit einem Reinigungsvorgang des Tränkebehälters erläutert, können wahlweise an der Absauglanze angeordnet sein.

In einer Ausgestaltung weist die Einrichtung zur Ermittlung einer Restmenge eine Waage auf, die zur Bestimmung eines Gewichts des Restmengbehälters eingerichtet ist. Mit der Waage wird das Gewicht des Restmengenbehälters einschließlich der in dem Restmengenbehälter angeordneten Flüssigkeit und gegebenenfalls einschließlich weiterer Bauteile des Milchwagens bestimmt. Eine einzelne Restmenge kann dann sehr einfach anhand der Gewichtszunahme, die mit dem Einfüllen einer Restmenge einhergeht, ermittelt werden. Die Waage kann insbesondere einen oder mehrere Kraftaufnehmer bzw. eine oder mehrere Wägezellen aufweisen. Beispielsweise kann die Waage zwischen dem Restmengenbehälter und einem Fahrgestell des Milchwagens angeordnet sein. Grundsätzlich ist jedoch auch eine Anordnung der Waage beispielsweise zwischen dem Fahrgestell und den Rädern möglich.

In einer Ausgestaltung weist die Einrichtung zur Ermittlung einer Restmenge einen Füllstandssensor auf, der dazu ausgebildet ist, einen Füllstand in dem Restmengenbehälter zu erfassen. In diesem Fall kann eine in den Restmengenbehälter eingefüllte Restmenge anhand einer damit einhergehenden Veränderung des Füllstands ermittelt werden.

In einer Ausgestaltung weist die Einrichtung zur Ermittlung einer Restmenge einen Lagesensor auf, der eine Neigung des Restmengenbehälters erfasst, wobei die Einrichtung zur Ermittlung einer Restmenge dazu ausgebildet ist, bei der Ermittlung der Restmenge auf Grundlage eines mit der Waage bestimmten Gewichts des Restmengenbehälters und/oder auf Grundlage eines mit dem Füllstandssensor erfassten Füllstands in dem Restmengenbehälter eine erfasste Neigung des Restmengenbehälters zu berücksichtigen. Dadurch kann die Genauigkeit der Restmengenermittlung erheblich verbessert werden, insbesondere wenn der Milchwagen auf unebenem Gelände eingesetzt wird.

In einer Ausgestaltung weist die Einrichtung zur Ermittlung einer Restmenge einen Durchflussmesser auf, der dazu eingerichtet ist, eine mit der Absaugpumpe aus einem Tränkebehälter abgesaugte Flüssigkeitsmenge zu messen. Durch geeignete Vorkehrungen kann verhindert werden, dass die Messung der Flüssigkeitsmenge durch Ansaugen von Luft beeinträchtigt wird. Da der Durchflussmesser nicht in einer Leitung angeordnet ist, durch die frisches Nahrungsmittel geführt wird, ergeben sich aus seiner Verwendung keine Hygieneprobleme. Gleichwohl ist eine genaue Restmengenermittlung möglich.

In einer Ausgestaltung ist die Einrichtung zur Ermittlung einer Restmenge dazu ausgebildet, eine mit der Absaugpumpe aus einem Tränkebehälter abgesaugte Flüssigkeitsmenge anhand einer Laufzeit der Absaugpumpe zu bestimmen. Hierfür kann eine Kalibrierung der Absaugpumpe erforderlich sein. Die Kalibrierung liefert eine exakte Angabe für die Fördermenge der Absaugpumpe pro Zeiteinheit. Auch in diesem Fall ist dafür Sorge zu tragen, dass Zeiten, in denen die Absaugpumpe trockenläuft, nicht als Laufzeit angerechnet werden. Um die Genauigkeit der Restmengenermittlung auf diesem Wege weiter zu verbessern, kann die Kalibrierung weitere Betriebsparameter berücksichtigen, insbesondere einen aktuellen Füllstand im Restmengenbehälter, eine aktuelle Höhendifferenz, insbesondere zwischen einer Höhe einer Absaugöffnung und einer Referenzhöhe des Milchwagens, und/oder eine Batteriespannung einer zur Stromversorgung der Absaugpumpe eingesetzten Batterie des Milchwagens.

Nachfolgend wird die Erfindung anhand von in Figuren dargestellten Ausführungsbeispielen näher erläutert.

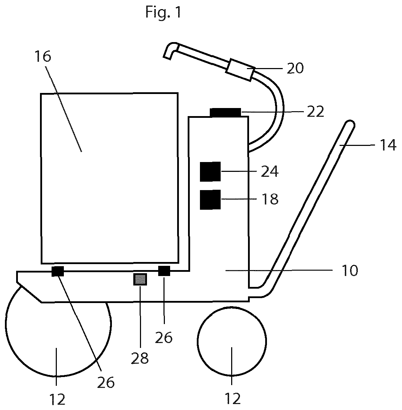

Jede der Figuren 1 bis 5 zeigt ein Ausführungsbeispiel eines Milchwagens in einer vereinfachten, schematischen Seitenansicht.

Alle Milchwagen der Figuren 1 bis 5 weisen ein Fahrgestell 10 mit Rädern 12 sowie einen Handgriff 14 auf, mit dem der Milchwagen von einer Bedienperson manövriert werden kann. Außerdem haben alle die in den Figuren 1 bis 5 gezeigten Milchwagen einen Vorratsbehälter 16 zur Aufnahme eines Vorrats an flüssigem Nahrungsmittel.

Obwohl dies in den Figuren nicht gezeigt ist, kann jeder der Milchwagen ein Rührwerk zum Umwälzen und/oder Durchmischen der Flüssigkeit in dem Vorratsbehälter aufweisen und/oder eine Heizeinrichtung, mit der die in dem Vorratsbehälter 16 befindliche Flüssigkeit temperiert werden kann. Weiter kann der Vorratsbehälter 16 von einem nicht gezeigten Deckel verschlossen sein.

Jeder der gezeigten Milchwagen weist außerdem eine Dosiersteuerung 18 und eine Abgabevorrichtung 20 auf. Mithilfe der Dosiersteuerung 18 wird eine nicht dargestellte Förderpumpe gesteuert, mit der flüssiges Nahrungsmittel aus dem Vorratsbehälter 16 durch die Abgabevorrichtung 20 hindurch in einen Tränkebehälter eingefüllt werden kann. Außerdem weist jeder Milchwagen eine Erfassungseinrichtung 22 zum Erfassen einer einem Tränkebehälter oder einem Nutztier zugeordneten Kennzeichnung auf. Diesbezüglich ist mit dem Bezugszeichen 22 schematisch eine Antenne einer RFID-Sende- und Empfangseinrichtung angedeutet.

Schließlich hat jeder der Milchwagen eine Auswerteeinrichtung 24, mit der eine mit der Dosiersteuerung 18 in einen identifizierten Tränkebehälter abgegebene Befüllmenge und eine mit einer Einrichtung zur Ermittlung einer Restmenge ermittelte Restmenge protokolliert und/oder ausgewertet werden kann.

Im Beispiel der Figur 1 dient der Vorratsbehälter 16 des Milchwagens zugleich als Restmengenbehälter. Als Einrichtung zur Ermittlung einer Restmenge sind zwei Wägezellen 26 zwischen Fahrgestell 10 und Vorratsbehälter 16 angeordnet. Mit diesen Wägezellen 26 wird das Gewicht des Vorratsbehälters 16 einschließlich der darin befindlichen Flüssigkeitsmenge bestimmt. Dabei kann mit einem zusätzlich vorgesehenen Lagesensor 28 eine Neigung des Restmengenbehälters erfasst werden, die bei der Ermittlung der Restmenge berücksichtigt werden kann.

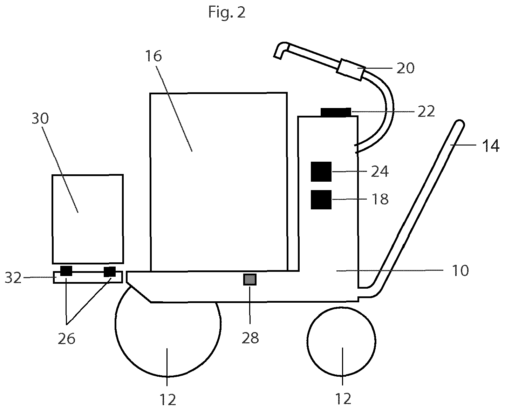

Im Beispiel der Figur 2 ist ein gesonderter Restmengenbehälter 30 vorgesehen. Dieser ist benachbart zu dem Vorratsbehälter 16 an einer mit dem Fahrgestell 10 verbundenen Fahrgestellerweiterung 32 befestigt. Die Wägezellen 26 sind in diesem Fall zwischen der Fahrgestellerweiterung 32 und dem Restmengenbehälter 30 angeordnet. Der Lagesensor 28 ist gegenüber dem Beispiel der Figur 1 unverändert am Fahrgestell 10 angeordnet, wobei er weiterhin zum Erfassen der Neigung des Restmengenbehälters 30 verwendet wird.

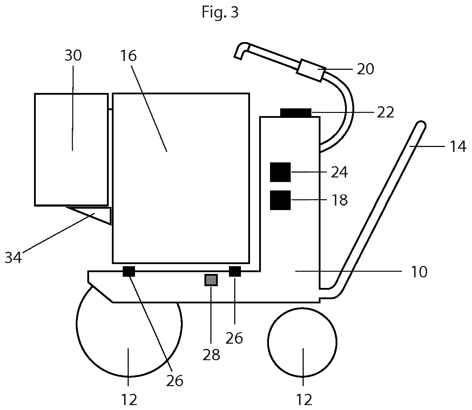

Im Beispiel der Figur 3 ist der gesonderte Restmengenbehälter 30 unmittelbar benachbart zu dem Vorratsbehälter 16 angeordnet und über eine Halterung 34 an diesem befestigt. Die Wägezellen 26 und der Lagesensor 28 sind so angeordnet, wie in Figur 1 beschrieben. Somit erfassen sie das Gesamtgewicht von Vorratsbehälter 16 und Restmengenbehälter 30 einschließlich der darin enthaltenen Flüssigkeiten. Gleichwohl können sie zur Ermittlung einer in den Restmengenbehälter 30 entleerten Restmenge genutzt werden.

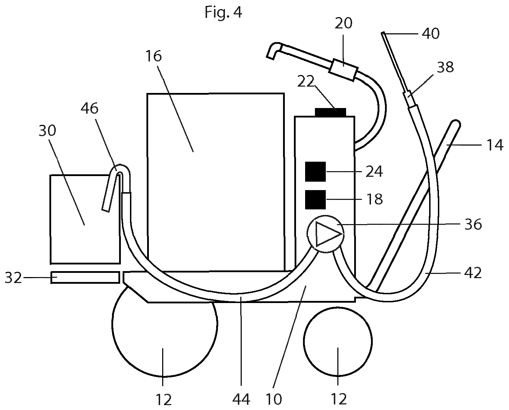

Im Beispiel der Figur 4 wird ebenfalls ein gesonderter Restmengenbehälter 30 eingesetzt, der ähnlich wie in Figur 2 auf einer Fahrgestellerweiterung 32 angeordnet ist. Ebenso gut könnte der gesonderte Restmengenbehälter 30 jedoch auch bei dieser Ausführung am Vorratsbehälter 16 angeordnet und befestigt werden, ähnlich wie in Figur 3 gezeigt.

Die Besonderheit der Ausführung gemäß Figur 4 besteht in einer Absaugpumpe 36, deren Saugseite über eine Absaugleitung 42 mit einer handhabbaren Absauglanze 38, die an ihrem vorderen Ende eine Absaugöffnung 40 aufweist, verbunden ist. Die Druckseite der Absaugpumpe 36 ist mit einer weiteren Leitung 44 verbunden, die zum Restmengenbehälter 30 führt. Hierfür weist die weitere Leitung 44 an ihrem freien Ende ein abgewinkeltes Auslaufrohr 46 auf, das am Rand des Restmengenbehälters 30 eingehängt ist. Alternativ, falls der Vorratsbehälter 16 als Restmengenbehälter eingesetzt werden soll, kann dieses Auslaufrohr 46 auch in den Vorratsbehälter 16 eingehängt werden.

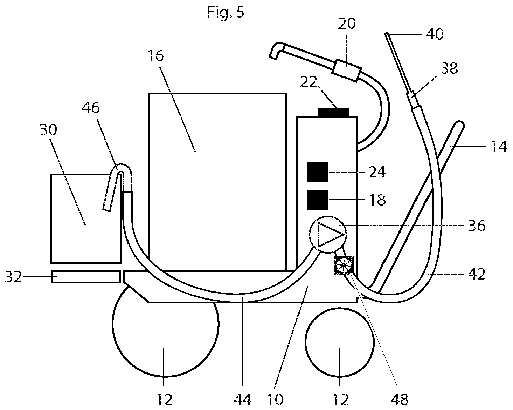

Das Beispiel der Figur 5 entspricht weitgehend demjenigen der Figur 4. Einziger Unterschied ist, dass in die Absaugleitung 42 ein Durchflussmesser 48 integriert ist, mit dem eine von der Absaugpumpe 36 abgesaugte Restmenge ermittelt werden kann. Alternativ kann der Durchflussmesser 48 auch in die weitere Leitung 44 integriert werden.

### Liste der verwenden Bezugszeichen

- 10: Fahrgestell
- 12: Räder
- 14: Handgriff
- 16: Vorratsbehälter
- 18: Dosiersteuerung
- 20: Abgabevorrichtung
- 22: Erfassungseinrichtung
- 24: Auswerteeinrichtung
- 26: Wägezellen
- 28: Lagesensor
- 30: Restmengenbehälter
- 32: Fahrgestellerweiterung
- 34: Halterung
- 36: Absaugpumpe
- 38: Absauglanze
- 40: Absaugöffnung
- 42: Absaugleitung
- 44: weitere Leitung
- 46: Auslaufrohr
- 48: Durchflussmesser

## Patentansprüche

1. Verfahren zur Fütterung von Nutztieren mit einem flüssigen Nahrungsmittel, wobei das Verfahren die folgenden Schritte aufweist:
• Bereitstellen eines Milchwagens, der einen Vorratsbehälter (16) mit einem Vorrat des flüssigen Nahrungsmittels, eine Erfassungseinrichtung (22) zum Erfassen einer einem Tränkebehälter zugeordneten Kennzeichnung und eine Dosiersteuerung (18) zum automatischen Abgeben einer definierten Menge des flüssigen Nahrungsmittels aus dem Vorratsbehälter (16) in einen Tränkebehälter aufweist,
• Identifizieren eines Tränkebehälters, der einem bestimmten Tier oder einer bestimmten Gruppe von Tieren zugeordnet ist, mit der Erfassungseinrichtung (22) und Befüllen des identifizierten Tränkebehälters mit der Dosiersteuerung (18) mit einer Befüllmenge des flüssigen Nahrungsmittels zu einem ersten Zeitpunkt,
• Speichern der Befüllmenge für eine spätere Nachvollziehbarkeit der dem bestimmten Tier oder der bestimmten Gruppe von Tieren angebotenen Nahrungsmittelmenge,
• Erneutes Identifizieren des Tränkebehälters mit der Erfassungseinrichtung (22) und Ermitteln einer in dem Tränkebehälter enthaltenen Restmenge zu einem zweiten, späteren Zeitpunkt, wobei das Ermitteln der Restmenge mit einer Einrichtung des Milchwagens zur Ermittlung einer Restmenge erfolgt,
• Berechnen einer konsumierten Menge des flüssigen Nahrungsmittels als Differenz zwischen der Befüllmenge und der Restmenge.

2. Verfahren nach Anspruch 1, **dadurch gekennzeichnet, dass** das Verfahren mit dem einen Milchwagen für eine große Anzahl von Tränkebehältern ausgeführt wird, wobei die Tränkebehälter zunächst identifiziert und befüllt werden und das erneute Identifizieren und Ermitteln der Restmengen später in beliebiger Reihenfolge erfolgt.

3. Verfahren nach Anspruch 1 oder 2, **dadurch gekennzeichnet, dass** die dem Tränkebehälter zugeordnete Kennzeichnung maschinenlesbar ist und von der Erfassungseinrichtung (22) automatisch eingelesen wird.

4. Verfahren nach einem der Ansprüche 1 bis 3, **dadurch gekennzeichnet, dass** der erneut identifizierte Tränkebehälter in den Vorratsbehälter (16) oder in einen gesonderten Restmengenbehälter (30) des Milchwagens entleert wird.

5. Verfahren nach einem der Anspruch 1 bis 4, **dadurch gekennzeichnet, dass** der erneut identifizierte Tränkebehälter nach dem Ermitteln der Restmenge mit der Dosiersteuerung (18) mit einer neuen Befüllmenge des flüssigen Nahrungsmittels befüllt und die neue Befüllmenge gespeichert wird.

6. Verfahren nach Anspruch 5, **dadurch gekennzeichnet, dass** die neue Befüllmenge automatisch in Abhängigkeit von einer zuvor für denselben Tränkebehälter ermittelten Restmenge und/oder in Abhängigkeit von einer zuvor für denselben Tränkebehälter berechneten konsumierten Menge festgelegt wird.

7. Milchwagen zur Fütterung von Nutztieren mit einem flüssigen Nahrungsmittel, wobei der Milchwagen folgendes aufweist:
• einen Vorratsbehälter (16) zur Aufnahme eines Vorrats des flüssigen Nahrungsmittels,
• eine Erfassungseinrichtung (22) zum Erfassen einer einem Tränkebehälter zugeordneten Kennzeichnung, und
• eine Dosiersteuerung (18) zum automatischen Abgeben einer Befüllmenge des flüssigen Nahrungsmittels aus dem Vorratsbehälter (16) in einen Tränkebehälter, **gekennzeichnet durch**
• eine Einrichtung zur Ermittlung einer Restmenge, die einem Tränkebehälter zu entnehmen ist oder entnommen wurde, und
• eine Auswerteeinrichtung, die dazu ausgebildet ist, eine Befüllmenge, die mit der Dosiersteuerung (18) in einen identifizierten Tränkebehälter abgegeben wird, und eine mit der Einrichtung zur Ermittlung einer Restmenge ermittelte Restmenge zu protokollieren und/oder auszuwerten.

8. Milchwagen nach Anspruch 7, **dadurch gekennzeichnet, dass** die Auswerteeinrichtung (24) dazu ausgebildet ist, eine konsumierte Menge des flüssigen Nahrungsmittels als Differenz zwischen der Befüllmenge und der Restmenge zu berechnen.

9. Milchwagen nach Anspruch 7 oder 8, **dadurch gekennzeichnet, dass** der Milchwagen einen Restmengenbehälter (30) aufweist, der zur Aufnahme von Restmengen aus Tränkebehältern vorgesehen ist, wobei der Restmengenbehälter (30) von dem Vorratsbehälter (16) gebildet oder ein davon getrennter Behälter ist.

10. Milchwagen nach Anspruch 9, **dadurch gekennzeichnet, dass** der Milchwagen eine Absaugpumpe (36) zum Absaugen von Restmengen aus Tränkebehältern aufweist, wobei an einer Druckseite der Absaugpumpe (36) eine Leitung (44) angeordnet ist, die zu dem Restmengenbehälter (30) führt.

11. Milchwagen nach Anspruch 10, **dadurch gekennzeichnet, dass** der Milchwagen eine handhabbare Absauglanze (38) aufweist, die über eine Absaugleitung (42) mit einer Saugseite der Absaugpumpe (36) verbunden ist, wobei optional an der Absauglanze (38) ein Bedienelement zum Einschalten der Absaugpumpe (36) angeordnet ist.

12. Milchwagen nach einem der Ansprüche 9 bis 11, **dadurch gekennzeichnet, dass** die Einrichtung zur Ermittlung einer Restmenge eine Waage aufweist, die zur Bestimmung eines Gewichts des Restmengenbehälters (30) eingerichtet ist, oder dass die Einrichtung zur Ermittlung einer Restmenge einen Füllstandssensor aufweist, der dazu ausgebildet ist, einen Füllstand in dem Restmengenbehälter (30) zu erfassen.

13. Milchwagen nach Anspruch 12, **dadurch gekennzeichnet, dass** die Einrichtung zur Ermittlung einer Restmenge einen Lagesensor (28) aufweist, der eine Neigung des Restmengenbehälters (30) erfasst, wobei die Einrichtung zur Ermittlung einer Restmenge dazu ausgebildet ist, bei der Ermittlung der Restmenge auf Grundlage eines mit der Waage bestimmten Gewichts des Restmengenbehälters (30) und/oder auf Grundlage eines mit dem Füllstandssensor erfassten Füllstands in dem Restmengenbehälter (30) eine erfasste Neigung des Restmengenbehälters (30) zu berücksichtigen.

14. Milchwagen nach einem der Ansprüche 7 bis 13, **dadurch gekennzeichnet, dass** die Einrichtung zur Ermittlung einer Restmenge einen Durchflussmesser (48) aufweist, der dazu eingerichtet ist, eine mit der Absaugpumpe (36) aus einem Tränkebehälter abgesaugte Flüssigkeitsmenge zu messen.

15. Milchwagen nach einem der Ansprüche 10 bis 14, **dadurch gekennzeichnet, dass** die Einrichtung zur Ermittlung einer Restmenge dazu ausgebildet ist, eine mit der Absaugpumpe (36) aus einem Tränkebehälter abgesaugte Flüssigkeitsmenge anhand einer Laufzeit der Absaugpumpe (36) zu bestimmen.

## Claims

1. A method for feeding livestock with a liquid feed, wherein the method comprises the following steps:
• providing a milk cart which comprises a storage container (16) having a store of the liquid feed, a detection apparatus (22) for detecting an identifier assigned to a drinking container, and a dosing controller (18) for automatically dispensing a defined quantity of the liquid feed from the storage container (16) into a drinking container,
• identifying a drinking container that is assigned to a particular animal or to a particular group of animals by means of the detection apparatus (22) and filling the identified drinking container with a filling quantity of the liquid feed at a first point in time by means of the dosing controller (18),
• storing the filling quantity for later traceability of the feed quantity offered to the particular animal or to the particular group of animals,
• re-identifying the drinking container by means of the detection apparatus (22) and ascertaining a residual quantity contained in the drinking container at a second, later point in time, wherein the residual quantity is ascertained by means of an apparatus of the milk cart for ascertaining a residual quantity,
• calculating a consumed quantity of the liquid feed as a difference between the filling quantity and the residual quantity.

2. The method according to claim 1, **characterized in that** the method is carried out using the one milk cart for a large number of drinking containers, wherein the drinking containers are initially identified and filled and the re-identification and the ascertaining of the residual quantities take place later in any desired order.

3. The method according to claim 1 or 2, **characterized in that** the identifier assigned to the drinking container is machine-readable and is automatically read in by the detection apparatus (22).

4. The method according to any one of claims 1 to 3, **characterized in that** the re-identified drinking container is emptied into the storage container (16) or into a special residual quantity container (30) of the milk cart.

5. The method according to any one of claims 1 to 4, **characterized in that** the re-identified drinking container is filled with a new filling quantity of the liquid feed by means of the dosing controller (18) after the residual quantity has been ascertained, and the new filling quantity is stored.

6. The method according to claim 5, **characterized in that** the new filling quantity is automatically set depending on a residual quantity previously ascertained for the same drinking container and/or depending on a consumed quantity previously calculated for the same drinking container.

7. A milk cart for feeding livestock with a liquid feed, wherein the milk cart comprises the following:
• a storage container (16) for receiving a store of the liquid feed,
• a detection apparatus (22) for detecting an identifier assigned to a drinking container, and
• a dosing controller (18) for automatically dispensing a filling quantity of the liquid feed from the storage container (16) into a drinking container, **characterized by**
• an apparatus for ascertaining a residual quantity that is to be drawn or that has been drawn from a drinking container, and
• an evaluation apparatus which is designed to record and/or evaluate a filling quantity dispensed by means of the dosing controller (18) into an identified drinking container as well as a residual quantity ascertained by means of the apparatus for ascertaining a residual quantity.

8. The milk cart according to claim 7, **characterized in that** the evaluation apparatus (24) is designed to calculate a consumed quantity of the liquid feed as a difference between the filling quantity and the residual quantity.

9. The milk cart according to claim 7 or 8, **characterized in that** the milk cart comprises a residual quantity container (30) which is provided for receiving residual quantities from drinking containers, wherein the residual quantity container (30) is formed by the storage container (16) or is a container that is separate therefrom.

10. The milk cart according to claim 9, **characterized in that** the milk cart comprises a suction pump (36) for sucking residual quantities from drinking containers, wherein a line (44) that leads to the residual quantity container (30) is arranged on a delivery side of the suction pump (36).

11. The milk cart according to claim 10, **characterized in that** the milk cart comprises a handleable suction lance (38) which is connected via a suction line (42) to an intake side of the suction pump (36), wherein an operating element for switching on the suction pump (36) is optionally arranged on the suction lance (38).

12. The milk cart according to any one of claims 9 to 11, **characterized in that** the apparatus for ascertaining a residual quantity comprises a weighing scale which is configured to determine a weight of the residual quantity container (30), or **in that** the apparatus for ascertaining a residual quantity comprises a fill level sensor which is designed to detect a fill level in the residual quantity container (30).

13. The milk cart according to claim 12, **characterized in that** the apparatus for ascertaining a residual quantity comprises a position sensor (28) which detects an inclination of the residual quantity container (30), wherein the apparatus for ascertaining a residual quantity is designed to take account of a detected inclination of the residual quantity container (30) when ascertaining the residual quantity based on a weight of the residual quantity container (30) determined by means of the weighing scale and/or based on a fill level in the residual quantity container (30) detected by means of the fill level sensor.

14. The milk cart according to any one of claims 7 to 13, **characterized in that** the apparatus for ascertaining a residual quantity comprises a flow meter (48) which is configured to measure a liquid quantity sucked out of a drinking container by means of the suction pump (36).

15. The milk cart according to any one of claims 10 to 14, **characterized in that** the apparatus for ascertaining a residual quantity is designed to determine, based on a running time of the suction pump (36), a liquid quantity sucked from a drinking container by means of the suction pump (36).

## Revendications

1. Procédé d'alimentation du bétail avec une nourriture liquide, le procédé présentant les étapes suivantes :
• mise à disposition d'un camion de laitier, lequel présente un réservoir (16) avec une réserve de la nourriture liquide, un dispositif de détection (22) pour la détection d'un identifiant attribué à un abreuvoir et une commande de dosage (18) pour la distribution automatique d'une quantité définie de la nourriture liquide à partir du réservoir (16) dans un abreuvoir,
• identification d'un abreuvoir, lequel est attribué à un animal ou à un groupe d'animaux en particulier, à l'aide du dispositif de détection (22) et remplissage de l'abreuvoir identifié à l'aide de la commande de dosage (18) avec une quantité de remplissage de la nourriture liquide à un premier moment,
• enregistrement de la quantité de remplissage pour une traçabilité ultérieure de la quantité de nourriture proposée à l'animal ou au groupe d'animaux en particulier,
• nouvelle identification de l'abreuvoir à l'aide du dispositif de détection (22) et détermination d'une quantité résiduelle contenue dans l'abreuvoir à un deuxième instant ultérieur, la détermination de la quantité résiduelle étant effectuée à l'aide d'un dispositif du camion de laitier pour la détermination d'une quantité résiduelle,
• calcul d'une quantité consommée de la nourriture liquide en tant que différence entre la quantité de remplissage et la quantité résiduelle.

2. Procédé selon la revendication 1, **caractérisé en ce que** le procédé est mis en oeuvre avec ledit camion de laitier pour un grand nombre d'abreuvoirs, dans lequel les abreuvoirs sont tout d'abord identifiés et remplis et la nouvelle identification et la détermination des quantités résiduelles sont effectuées ultérieurement dans un ordre au choix.

3. Procédé selon la revendication 1 ou 2, **caractérisé en ce que** l'identifiant attribué à l'abreuvoir est lisible par machine et lu automatiquement par le dispositif de détection (22).

4. Procédé selon l'une des revendications 1 à 3, **caractérisé en ce que** l'abreuvoir de nouveau identifié est vidé dans le réservoir (16) ou dans un récipient de quantité résiduelle (30) séparé du camion de laitier.

5. Procédé selon l'une des revendications 1 à 4, **caractérisé en ce que** l'abreuvoir de nouveau identifié est rempli avec une nouvelle quantité de remplissage de la nourriture liquide après la détermination de la quantité résiduelle à l'aide du dispositif de détection (22) et la nouvelle quantité de remplissage est enregistrée.

6. Procédé selon la revendication 5, **caractérisé en ce que** la nouvelle quantité de remplissage est fixée automatiquement en fonction d'une quantité résiduelle déterminée précédemment pour le même abreuvoir et/ou en fonction d'une quantité consommée calculée précédemment pour le même abreuvoir.

7. Camion de laitier pour l'alimentation du bétail avec une nourriture liquide, le camion de laitier présentant les éléments suivants :
• un réservoir (16) destiné à recevoir une réserve de la nourriture liquide,
• un dispositif de détection (22) destiné à détecter un identifiant attribué à un abreuvoir, et
• une commande de dosage (18) destinée à distribuer automatiquement une quantité de remplissage de la nourriture liquide à partir du réservoir (16) dans un abreuvoir, **caractérisé par**
• un dispositif de détermination d'une quantité résiduelle, laquelle doit être retirée ou a été retirée d'un abreuvoir, et
• un dispositif d'évaluation, lequel est conçu pour consigner et/ou évaluer une quantité de remplissage distribuée à l'aide de la commande de dosage (18) dans un abreuvoir identifié, et une quantité résiduelle déterminée à l'aide du dispositif de détermination d'une quantité résiduelle.

8. Camion de laitier selon la revendication 7, **caractérisé en ce que** le dispositif d'évaluation (24) est conçu pour calculer une quantité consommée de la nourriture liquide en tant que différence entre la quantité de remplissage et la quantité résiduelle.

9. Camion de laitier selon la revendication 7 ou 8, **caractérisé en ce que** le camion de laitier présente un récipient de quantité résiduelle (30), lequel est prévu pour la réception de quantités résiduelles, dans lequel le récipient de quantité résiduelle (30) est constitué du réservoir (16) ou d'un récipient séparé.

10. Camion de laitier selon la revendication 9, **caractérisé en ce que** le camion de laitier présente une pompe d'aspiration (36) destinée à aspirer des quantités résiduelles à partir d'abreuvoirs, dans lequel une conduite (44) menant au récipient de quantité résiduelle (30) est disposée sur un côté pression de la pompe d'aspiration (36).

11. Camion de laitier selon la revendication 10, **caractérisé en ce que** le camion de laitier présente une lance d'aspiration manipulable (38), laquelle est reliée à un côté aspiration de la pompe d'aspiration (36) par le biais d'une conduite d'aspiration (42), dans lequel un élément d'actionnement destiné à activer la pompe d'aspiration (36) est disposé facultativement sur la lance d'aspiration (38).

12. Camion de laitier selon l'une des revendications 9 à 11, **caractérisé en ce que** le dispositif de détermination d'une quantité résiduelle présente une balance conçue pour la détermination d'un poids du récipient de quantité résiduelle (30), ou **en ce que** le dispositif de détermination d'une quantité résiduelle présente un capteur de niveau de remplissage conçu pour détecter un niveau de remplissage dans le récipient de quantité résiduelle (30).

13. Camion de laitier selon la revendication 12, **caractérisé en ce que** le dispositif de détermination d'une quantité résiduelle présente un capteur de position (28) détectant une inclinaison du récipient de quantité résiduelle (30), dans lequel le dispositif de détermination d'une quantité résiduelle est conçu pour tenir compte d'une inclinaison détectée du récipient de quantité résiduelle (30) lors de la détermination de la quantité résiduelle sur la base d'un poids du récipient de quantité résiduelle (30) déterminé à l'aide de la balance et/ou sur la base d'un niveau de remplissage dans le récipient de quantité résiduelle (30) détecté à l'aide du capteur de niveau de remplissage.

14. Camion de laitier selon l'une des revendications 7 à 13, **caractérisé en ce que** le dispositif de détermination d'une quantité résiduelle présente un débitmètre (48) conçu pour mesurer une quantité de liquide aspirée à partir d'un abreuvoir à l'aide de la pompe d'aspiration (36).

15. Camion de laitier selon l'une des revendications 10 à 14, **caractérisé en ce que** le dispositif de détermination d'une quantité résiduelle est conçu pour déterminer une quantité de liquide aspirée à partir d'un abreuvoir à l'aide de la pompe d'aspiration (36) selon une durée de fonctionnement de la pompe d'aspiration (36).
